# EUROPÄISCHE PATENTSCHRIFT

(11) **EP 1 900 446 B1**
(45) Veröffentlichungstag und Bekanntmachung des Hinweises auf die Patenterteilung: **17.02.2010**
(21) Anmeldenummer: 07015657.5
(22) Anmeldetag: 09.08.2007
(51) Int. Cl.: B07C 5/34, G01N 21/90

(54) **Verfahren und Vorrichtung zum Aussortieren von Objekten aufgrund von Gebrauchsspuren**
Method and device for separating out objects on the basis of signs of use
Procédé et dispositif destinés au tri d'objets en fonction de traces d'utilisation

(30) Priorität: 15.09.2006 DE 102006043466
(43) Veröffentlichungstag der Anmeldung: 19.03.2008
(73) Patentinhaber: Krieg, Gunther, Prof.Dr.Ing., 76227 Karlsruhe (DE)
(72) Erfinder: Zimmermann, Andreas, 76676 Graben-Neudorf (DE); Amoi-Taleghani, Kaweh, 76534 Baden-Baden (DE); Idec, Peter, 43084 Osnabrück (DE)

(56) Entgegenhaltungen:
- EP-A- 0 516 956
- EP-A- 0 599 021
- WO-A-98/26278
- WO-A-02/054051
- DE-A1- 2 619 615
- DE-A1- 4 320 331
- DE-B3-102004 025 948
- US-A- 4 691 231
- US-A1- 2003 194 123

## Beschreibung

Die Erfindung betrifft ein Verfahren zum Aussortieren von Objekten, insbesondere Getränkeflaschen aus Glas oder Kunststoff, aufgrund von Gebrauchsspuren, wie Kratzern oder dergleichen, wobei ein Wert einer Kenngröße für die Gebrauchsspuren eines jeweiligen Objekts gemessen wird und das Objekt anhand eines Vergleichens mit einem Schwellenwert der Kenngröße aussortiert wird. Ferner betrifft die Erfindung eine Vorrichtung zum Aussortieren von Objekten, insbesondere Getränkeflaschen aus Glas oder Kunststoff, aufgrund von Gebrauchsspuren, wie Kratzer oder dergleichen, mit einer Messeinrichtung zum Messen eines Werts einer Kenngröße für die Gebrauchsspuren eines jeweiligen Objekts und einer Vergleichseinrichtung zum Vergleichen des gemessenen Werts mit einem Schwellenwert der Kenngröße, anhand welchem das Objekt aussortiert wird.

Mit steigenden Anforderungen an den Umweltschutz findet eine zunehmende Verlagerung von Umweltschutzmaßnahmen hin zu vorsorgenden Maßnahmen in Produktgestaltung und Produktnutzung und einer ressourcenschonenden Befriedigung von Bedürfnissen statt. In diesem Zusammenhang spielen Mehrwegprodukte, insbesondere Mehrwegverpackungen wie Flaschen aus Glas oder Kunststoff (PET), eine immer wichtigere Rolle. Eine Mehrwegverpackung ist im Gegensatz zur Einwegverpakkung für mehrere Umläufe ohne Beeinträchtigung der Schutz-, Transport-, Lager- und Umschlagfunktion verwertbar und wird idealerweise nach Entnahme des Produkts vom Endverbraucher zurückgegeben, gereinigt, erneut befüllt und anschließend wieder dem Handel zugeführt.

Jedoch sind derartige Mehrwegverpackungen im Zuge dieses Kreislaufes einer Vielzahl von Beanspruchungen ausgesetzt, welche Gebrauchsspuren in Form von Beschädigungen der Oberfläche, Kratzern oder Absprüngen hinterlassen können. Derartige Gebrauchsspuren an Mehrwegverpackungen, insbesondere Mehrwegflaschen, werden mit dem Begriff "Scuffing" bezeichnet. Ein Maß für die Stärke solcher Gebrauchsspuren ist durch den "Scuffing-Grad" gegeben. Sowohl aus Sicherheitsgründen wie aus Marketinggründen eines Produkts ist dafür Sorge zu tragen, dass zu stark angegriffene Mehrwegverpakkungen aus dem Verkehr gezogen und ersetzt werden.

Aus der DE 10 2004 025 948 B3 ist eine Vorrichtung und ein Verfahren zum Untersuchen von lichtdurchlässigen Mehrwegflaschen bekannt, wobei mit Hilfe einer Kamera und einer nachgeschalteten Bildverarbeitung eine Kenngröße für die Gebrauchsspuren des Mehrweg-Objekts in Form eines Helligkeitsgradienten-Bilds gemessen wird, anhand welcher das Objekt durch vergleichen mit einem absoluten Schwellenwert der Kenngröße aussortiert wird oder dem Mehrweg-Kreislauf wieder zugeführt wird. Dabei wird zumindest ein Teil des Lichtstrahls nach Durchdringen des Mehrwegobjekts mit einer Referenzgeometrie mit vorbekannten Helligkeitsprofil in Wechselwirkung gebracht.

Ein derartiges Verfahren weist den Nachteil auf, dass ein Aussortieren des Mehrweg-Objekts nur anhand eines Vergleichs mit einem absoluten Schwellenwert der Kenngröße entschieden wird, welcher ein absolutes Maß für die zulässigen Gebrauchsspuren ist, mit welchen das Objekt behaftet sein darf, um den notwendigen Qualitätsanforderungen zur Weiterverwertung zu entsprechen. Jedoch wäre ein weniger starres Auswahlverfahren zum Aussortieren von Objekten wünschenswert, bei welchem nicht nur die Qualitätsanforderungen eine Rolle spielen, die an das Objekt zu stellen sind, sondern auch der Umfang und das Ausmaß der vorhandenen und benötigten Ressourcen, welche dem Mehrweg-Kreislauf wieder zugeführt werden sollen. So kann es beispielsweise bei zeitweise steigender Nachfrage des Produkts, mit welchem die Mehrwegbehälter befüllt werden sollen, wünschenswert sein, die Qualitätsanforderungen an die Mehrwegbehälter zu senken, so dass eine genügende Anzahl von Behältern zur Verfügung steht, um die Nachfrage zu decken. Jedoch sollte eine Mindestanforderung an die Qualität der Behälter dennoch gewährleistet bleiben.

Der Erfindung liegt die Aufgabe zugrunde, ein Verfahren und eine Vorrichtung der eingangs genannten Art zu schaffen, die unter Vermeidung der vorgenannten Nachteile insbesondere die Flexibilität bei der Auswahl von auszusortierenden Objekten erhöhen soll und bei der Auswahl dennoch die gewünschten Qualitätsanforderungen berücksichtigen soll.

Erfindungsgemäß wird diese Aufgabe mit einem Verfahren gemäß Anspruch 1, sowie durch eine Vorrichtung gemäß Anspruch 3 gelöst. .

Es wird also der Schwellenwert der Kenngröße in Relation gesetzt zu den jeweils gemessenen Werten der Kenngröße einer vorgegebenen Anzahl von Objekten. Der Schwellenwert der Kenngröße bestimmt, dass - in der Regel - Behälter, deren Zustand schlechter ist, als es dem Schwellenwert entspricht, aussortiert werden, Behälter, deren Zustand besser ist, als es dem Schwellenwert entspricht, der Weiterverwendung zugeführt werden.

Der Schwellenwert wird derart dynamisch aufgrund des Zustandes der vorher gemessenen Flaschen bestimmt. Es wird erreicht, dass in der Regel immer etwa der gleiche Prozentsatz von Behältern aussortiert wird und damit die Zahl der verwendbaren Behälter unabhängig von der Qualität der Behälter planbar bleibt.

Im einfachsten Fall kann der Schwellenwert der Kenngröße beispielsweise durch Mittelwertbildung der Messwerte der Kenngröße und einer vorgegebenen Differenz hierzu ermittelt werden.

Somit ist es möglich, den Schwellenwert der Kenngröße, anhand welchem die Objekte aussortiert werden, an die vorhandenen und benötigten Ressourcen anzupassen. Eine konkrete Ausgestaltung sieht dabei vor, dass ein prozentualer Anteil von auszusortierenden Objekten vorgegeben wird, anhand welchem der Schwellenwert ermittelt wird.

Zum Erreichen einer vorteilhaften Einbindung in ein kontinuierliches Verfahren, und um somit den Anforderungen einer industriellen Abfüllanlage zu entsprechen, wird vorgeschlagen, dass die Werte der Kenngröße der vorgegebenen Anzahl von Objekten nacheinander gemessen werden. Eine gattungsgemäße Vorrichtung weist hierzu eine Transporteinrichtung zum An- und Abtransport einzelner Objekte durch die Messeinrichtung auf, welche beispielsweise durch ein Förderband gebildet ist.

In weiterer bevorzugter Ausgestaltung ist vorgesehen, dass die jeweils gemessenen Werte der Kenngröße der vorgegebenen Anzahl von Objekten in einer Liste gespeichert werden. Die Liste kann sukzessive mit den jeweils neu gemessenen Werten der Kenngröße erweitert werden, bis die Länge der Liste der vorgegebenen Anzahl von Objekten entspricht, so dass dann aus den einzelnen Listeneinträgen der Schwellenwert der Kenngröße ermittelt werden kann. In einer gattungsgemäßen Vorrichtung ist hierzu eine Datenverarbeitungsanlage zum Speichern und Weiterverarbeiten der jeweils gemessenen Werte der Kenngröße der vorgegebenen Anzahl von Objekten in einer Liste vorgesehen. Die Bestimmung des Schwellenwerts der Kenngröße kann schon bei einer vorgegebenen Mindestanzahl von Messungen einsetzen und die Zahl der zur Bildung des Schwellenwerts heranzuziehenden Messungen kann bis zu einer Anzahl erhöht werden, auf der sie dann konstant gehalten wird.

Der kontinuierliche Ablauf des Verfahrens kann weiterhin dadurch erreicht werden, dass der Schwellenwert der Kenngröße in einem ersten Schritt aus einer vorgegebenen Anzahl von Objekten ermittelt wird, bevor in einem zweiten Schritt Objekte anhand eines Vergleichens mit dem Schwellenwert der Kenngröße aussortiert werden. Dabei kann insbesondere in dem zweiten Schritt ein weiterer Schwellenwert der Kenngröße aus einer vorgegebenen Anzahl von Objekten ermittelt werden, mit welchem der in dem ersten Schritt ermittelte Schwellenwert der Kenngröße für einen nachfolgenden Schritt aktualisiert wird. In höchst bevorzugter Ausführung ist jedoch vorgesehen, dass in einer Liste mit den in dem ersten Schritt gemessenen Werten der Kenngröße der vorgegebenen Anzahl von Objekten in einem nachfolgenden Schritt jeweils ein Wert der Liste durch einen in dem nachfolgenden Schritt gemessenen Wert der Kenngröße eines Objekts ersetzt wird und dann aus den Werten der Liste ein weiterer Schwellenwert der Kenngröße ermittelt wird, mit welchem der in einem vorhergehenden Schritt ermittelte Schwellenwert der Kenngröße aktualisiert wird. Dadurch wird eine fortlaufende Auffrischung des Schwellenwerts der Kenngröße unter Einbeziehung des jeweils aktuellen Messwerts erreicht. Insbesondere ist vorteilhaft, wenn nach dem FIFO-Prinzip (First In-First Out) der jeweils ältere Eintrag der Liste durch den jeweils aktuellen Messwert ersetzt wird.

Wegen der hier auftretenden Problematik, dass der aus einer vorgegebenen Anzahl von Messwerten ermittelte Schwellenwert der Kenngröße etwaigen Qualitäts- und Sicherheitsanforderungen nicht genügen könnte, welche an die Objekte zu stellen sind, wird vorgeschlagen, dass - bei zum "Scuffing-Grad" umgekehrt proportionaler Kenngröße - der gemessene Wert der Kenngröße des jeweiligen Objekts zusätzlich mit einem Minimalwert der Kenngröße verglichen wird, der in einem vorhergehenden Schritt einmalig festgelegt wird, und das Objekt bei einem Unterschreiten des gemessenen Werts im Vergleich zu dem Minimalwert aussortiert wird.

Ebenso kann problematisch sein, dass der so ermittelte Schwellenwert zu hohe Anforderungen bezüglich des Qualitätszustands nicht auszusortierender Objekte darstellt, indem aufgrund des dynamisch ermittelten Schwellenwerts bei einem guten Ensemble noch sehr gute, wenig verkratzte Behälter aussortiert werden. Um ein Aussortieren von solchen "zu guten" Objekten zu vermeiden, die den gewünschten Qualitätsanforderungen sicher genügen, wird vorgeschlagen, dass - ebenfalls bei zum Scuffing-Grad umgekehrt proportionaler Kenngröße - der gemessene Wert der Kenngröße des jeweiligen Objekts zusätzlich mit einem Maximalwert der Kenngröße verglichen wird, der in einem vorhergehenden Schritt einmalig festgelegt wird, und das Objekt bei einem Überschreiten des gemessenen Werts im Vergleich zu dem Maximalwert nicht aussortiert wird.

Ist die Kenngröße proportional zum Scuffing-Grad, gilt Vorstehendes vice versa.

Solange die gewünschte oder erforderliche Mindestzahl von Messwerten zur Bestimmung eines dynamischen Schwellenwerts noch nicht vorliegt, oder auch um andererseits strikte Qualitätsanforderungen bezüglich der nicht auszusortierenden Objekte bedarfsweise mit einzubeziehen, sieht eine bevorzugte Ausgestaltung vor, dass die Objekte anhand eines Vergleichens ihres jeweils gemessenen Wertes der Kenngröße mit einem Absolutwert der Kenngröße aussortiert werden, welcher in einem vorhergehenden Schritt einmalig festgelegt wird. Dies kann beispielsweise mittels eines alternativen anfänglichen Betriebsmodus realisiert sein. Um dem Benutzer zu ermöglichen, je nach Bedarf einen geeigneten Betriebsmodus auszuwählen, wird vorgeschlagen, dass ein Vergleichen des gemessenen Werts der Kenngröße der Objekte alternativ entweder mit dem ermittelten Schwellenwert oder mit dem Absolutwert je nach Benutzervorgaben erfolgt.

Einem fälschenden und unerwünschten Einfluss von einzelnen Ausreißwerten der gemessenen Werte der Kenngröße, welche eine überdurchschnittlich hohe Abweichung von dem Mittelwert der Messwerte darstellen, kann durch geeignete Wahl der vorgegebenen Anzahl von Objekten vorgebeugt werden. In bevorzugter Ausführung entspricht die vorgegebene Anzahl von Objekten einem Wert von ≥ als 1000. Alternativ können einzelne Ausreißwerte durch vorteilhaftes Vergleichen mit dem Mittelwert der Messwerte auch einzeln eliminiert werden. Dabei kann auch eine weitaus geringere Anzahl von Objekten vorgegeben werden, aus welchen der Schwellenwert der Messgröße ermittelt wird. In bevorzugter Ausgestaltung kann vorgesehen sein, dass eine Liste mit einer großen Anzahl von gemessenen Werten der Kenngröße von Objekten jeweils durch einen neu gemessenen Wert der Kenngröße eines Objekts aktualisiert wird und hieraus für jeden neuen Messwert oder eine vorgegebene Anzahl neuer Messwerte ein neuer Schwellenwert der Kenngröße ermittelt wird.

Das erfindungsgemäße Verfahren kann beispielsweise dadurch realisiert werden, dass das Messen des Werts der Kenngröße der Objekte mittels eines Beobachtens von Lichteinstrahlung an den Objekten erfolgt, welche hierzu lichtdurchlässig sein können. Die Messeinrichtung einer gattungsgemäßen Vorrichtung umfasst dabei eine Lichtquelle zur Lichteinstrahlung auf jeweils ein Objekt und mindestens eine Beobachtungseinrichtung zur Aufnahme der Lichtstrahlen. Weiterhin kann die Messeinrichtung eine Referenzgeometrie mit vorbekanntem Helligkeitsprofil umfassen, welche mit wenigstens einem Teil der Lichtstrahlung vor der Aufnahme durch die Beobachtungseinrichtung in Wechselwirkung tritt. In einem gattungsgemäßen Verfahren kann dabei der gemessene Wert der Kenngröße einem Helligkeitsgradienten-Bild einer Referenzgeometrie mit vorbekanntem Helligkeitsprofil entsprechen, mit welcher das Licht vor dem Beobachten in Wechselwirkung gebracht wird. Das Helligkeitsgradienten-Bild kann beispielsweise mittels einer geeigneten Bildverarbeitungseinrichtung in der Beobachtungseinrichtung bestimmt werden.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Es zeigen:
- Fig. 1: eine schematische Darstellung einer erfindungsgemäßen Vorrichtung zum Aussortieren von Objekten aufgrund von Gebrauchsspuren;
- Fig. 2: ein Flussdiagramm eines erfindungsgemäßen Verfahrens zum Aussortieren von Objekten aufgrund von Gebrauchsspuren;
- Fig. 3: ein Diagramm eines beispielhaften funktionalen Verlaufs des ermittelten Werts der Kenngröße aus den sukzessiv nacheinander gemessenen Werten der Kenngröße jeweils einer vorgegeben Anzahl von Objekten in Abhängigkeit von der Gesamtzahl der gemessenen Objekte.

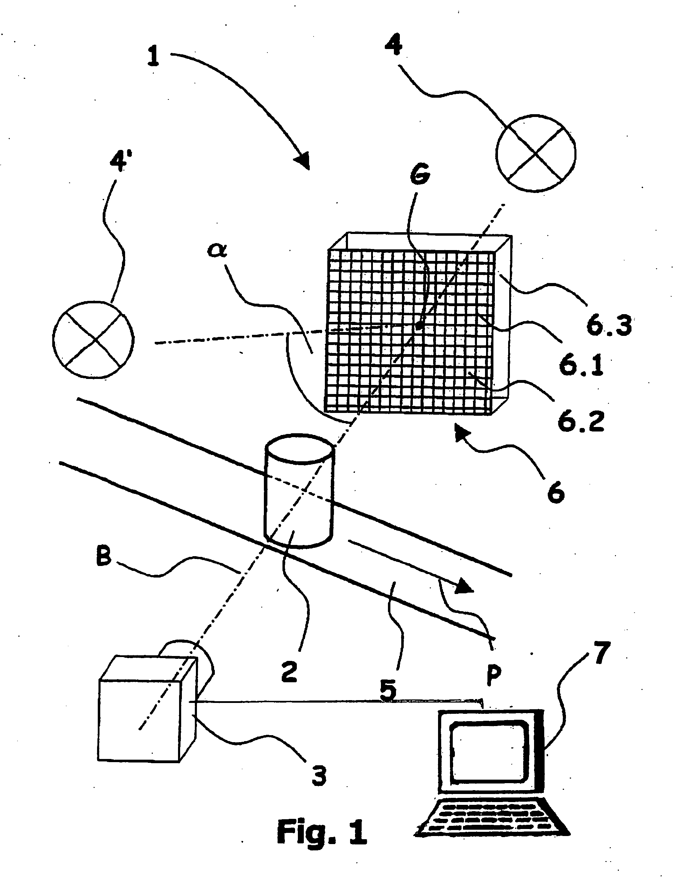

Die Fig. 1 zeigt lediglich beispielhaft den grundlegenden Aufbau einer erfindungsgemäßen Vorrichtung 1 zum Aussortieren von Objekten aufgrund von Gebrauchsspuren. Dabei ist eine Transporteinrichtung 5 in Form eines Förderbandes zum sukzessiven An- und Abtransport einer Folge von Objekten 2 hinsichtlich der Beobachtungsrichtung B in Form einer Kamera 3 vorgesehen, wobei die Transportrichtung P eines jeweiligen Objekts 2 in einem Winkel bezüglich zur Beobachtungsrichtung B angeordnet ist. Bei einem lediglich schematisch dargestellten Objekt 2 der Folge von nacheinander an- und abtransportierten Objekten kann es sich beispielsweise um Mehrweg-Getränkeflaschen aus Kunststoff, wie PET oder dergleichen, handeln.

Ausgehend von der Beobachtungseinrichtung 3 ist in Verlängerung in deren Beobachtungsrichtung B über das Objekt 2 hinaus eine Lichtquelle 4 vorgesehen, bei der es sich erfindungsgemäß um ein Blitzlicht oder alternativ um eine kontinuierlich lichtausstrahlende Quelle handeln kann.

Von der Beobachtungseinrichtung 3 ausgesehen kann hinter einem antransportierten Objekt 2, bei welchem ein Wert einer Kenngröße für Gebrauchsspuren gemessen werden soll, noch vor der Lichtquelle 4 eine Referenzgeometrie 6 mit bekanntem Helligkeitsprofil in Form eines quadratischen Gitters 6 angeordnet sein, welches hier exemplarisch als körperliches Gitter aus Metall oder einem anderen geeigneten Material, wie Kunststoff, dargestellt ist. Das quadratische Gitter ist durch quadratisch angeordnete Gitterstäbe 6.1 und zwischen den Gitterstäben 6.1 jeweils verbleibende Durchbrüche 6.2 gebildet. Gemäß einer ersten, in der Fig. 1 dargestellten Ausgestaltung der Erfindung ist die Referenzgeometrie/das Gitter 6 für das von der Lichtquelle 4 ausgestrahlte Licht durchlässig, so dass die Beobachtungseinrichtung 3 gemäß der in Fig. 1 dargestellten Anordnung von Lichtquelle 4, Gitter 6, Objekt 2 und Beobachtungseinrichtung 3 ein kombiniertes Bild zumindest eines Teilbereichs des Gitters 6 und eines Teilbereichs des Objekts 2 aufnimmt, wobei die Abbildungen des Gitters 6 und des Objekts 2 mit dem aufgenommenen Bild der Beobachtungseinrichtung 3 überlagert sind.

Die Lichtquelle 4 kann beispielsweise als eine matrixförmig-flächige Anordnung von (Infrarot-)Leuchtdioden (IR-LED) ausgebildet sein und, abweichend von der gezeigten Darstellung, auch in direkter baulich-körperlicher Verbindung mit der Referenzgeometrie 6 stehen, d.h. das Gitter 6 ist dann direkt auf der (flächigen) Lichtquelle angeordnet, die sich beispielsweise an der Stelle des Hintergrunds 6.3 befindet.

Nach einer alternativen Ausgestaltung der erfindungsgemäßen Vorrichtung 1, die in der Fig. 1 ebenfalls dargestellt ist, kann anstelle der Lichtquelle 4, die in Verbindung mit der gezeigten Anordnung von Objekt 2 und Beobachtungseinrichtung 3 im Durchlicht-Verfahren arbeitet, eine Lichtquelle 4' vorgesehen sein, die ausgehend von einem gedachten Punkt G auf dem Gitter 6 unter einem Winkel α zur Beobachtungsrichtung B der Beobachtungseinrichtung 3 angeordnet ist. Im Gegensatz zu der o.g. Lichtquelle 4 arbeitet die Lichtquelle 4' bezogen auf die Anordnung von Objekt 2 und Beobachtungseinrichtung 3 nicht im Durchlicht- sondern im Auflicht-Verfahren, wobei das in der Fig. 1 gezeigte Gitter 6 einen reflektierenden Hintergrund 6.3 nach Art einer Mattscheibe aufweist.

Das Gitter 6 besitzt ein vorbekanntes, möglichst kontrastreiches Helligkeitsprofil, das bei Lichteinstrahlung durch die Lichtquelle 4, 4' mit einem (Durchstrahlungs-)Bild des Objekts 2 überlagert und durch die Beobachtungseinrichtung 3 aufgenommen wird. Die Beobachtungseinrichtung 3 steht in Wirkverbindung mit einer Bildverarbeitungs-Einrichtung zum Verarbeiten der aufgenommenen Bilder des Objekts 2, beispielsweise zur Umwandlung in ein Helligkeitsgradienten-Bild, welches als Messwert der Kenngröße für die Gebrauchsspuren des Objekts 2 herangezogen wird. Weiterhin können in einer Bestimmungseinrichtung weitere Eigenschaften des Helligkeitsgradienten-Bilds analysiert werden und als gemessener Wert der Kenngröße des Objekts 2 herangezogen werden. Die Bildverarbeitungs-Einrichtung und die Bestimmungseinrichtung können beispielsweise in einer baulichen Einheit in einer Datenverarbeitungsanlage 7 verwirklicht sein, welche eine Datenverbindung mit der Beobachtungseinrichtung 3 aufweist.

Erfindungsgemäß ist eine weitere Funktionseinheit in Form einer Datenbank vorgesehen, welche mit der Bildverarbeitungs-Einrichtung und/oder der Bestimmungseinrichtung vorteilhaft zusammenwirkt, so dass die gemessenen Werte der Kenngröße der Gebrauchsspuren einer Folge mit einer vorgegebenen Anzahl an- und abtransportierter Objekte 2 beispielsweise in einer Datei in Form einer Liste gespeichert werden. Dabei kann vorgesehen sein, dass jeweils ein neuer Eintrag in die Liste unmittelbar nach der Messung des Wertes der Kenngröße eines jeweiligen Objekts 2 erfolgt. Ferner ist erfindungsgemäß eine weitere Funktionseinheit in Form eines Datenverarbeitungsprogramms vorgesehen, welches auf die in der Liste gespeicherten Werte der Kenngröße zugreift, beispielsweise nachdem eine vorgegebene Anzahl von Einträgen in die Liste erfolgt ist, und aus den gespeicherten Werten einen Schwellenwert der Kenngröße ermittelt, mit welchem die gemessenen Werte der im Folgenden an- bzw. abtransportierten Objekte 2 verglichen und anhand dieses Vergleichs aussortiert werden. Sowohl die Datenbank als auch das Datenweiterverarbeitungsprogramm sind zusammen mit der Bildverarbeitungs-Einrichtung und der Bestimmungseinrichtung als körperliche Einheit in der Datenverarbeitungsanlage 7 integriert.

Das Zusammenwirken der einzelnen Funktionseinheiten kann durch eine gemeinsame Funktionsoberfläche realisiert sein, welche vorteilhaft eine Benutzerschnittstelle aufweisen kann, über welche beispielsweise ein Betriebsmodus zum Aussortieren von Objekten anhand eines Vergleichs des gemessenen Werts der Kenngröße mit einem ermittelten Schwellenwert bzw. mit einem Absolutwert oder Parameter zur Ermittlung des Schwellenwerts (siehe unten) extern einstellbar sind.

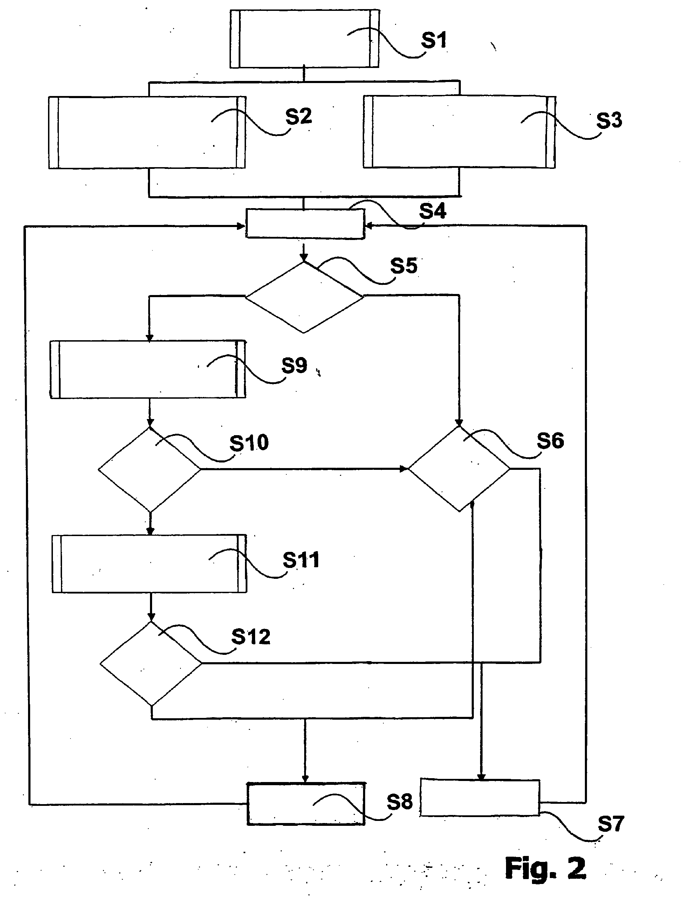

Die Fig. 2 zeigt ein Flussdiagramm eines erfindungsgemäßen Verfahrens zum Aussortieren von Objekten aufgrund von Gebrauchsspuren, welches beispielsweise durch eine Funktionsoberfläche mit den einzelnen o.g. Funktionseinheiten und einer Benutzerschnittstelle durchgeführt werden kann. Dabei erfolgt in einem ersten Schritt (Schritt Sl) eine Auswahl des Benutzers, welcher Betriebsmodus eines Vergleichens der gemessenen Werte einer Kenngröße der Objekte 2 herangezogen werden soll. Im Falle einer Auswahl eines vergleichens mit einem Absolutwert der Kenngröße, wird dieser in einem Schritt S3 einmalig festgelegt. Dies bedeutet, dass bei der Entscheidung hinsichtlich einer Aussortierung eines Objekts 2 eine absolute Grenze des Messwerts der Kenngröße ihrer Gebrauchsspuren herangezogen wird.

Alternativ kann eine prozentuale Aussortierung einzelner Objekte 2 hinsichtlich der Gesamtmenge der Objekte ausgewählt werden, wobei in einem Schritt S2 der Prozentsatz der auszusortierenden Objekte, sowie - gegebenenfalls - ein Minimalwert und/oder ein Maximalwert der Kenngröße einmalig festgelegt wird. Durch letztere Werte wird ein Toleranzintervall der Kenngröße einmalig definiert, so dass Objekte mit sehr starken Gebrauchsspuren in jedem Fall und Objekte mit weniger starken Gebrauchsspuren in keinem Fall ausgesondert werden, unabhängig von dem Prozentwert der auszusondernden Objekte, so dass erfindungsgemäß eine Qualitätssicherung der nicht ausgesonderten Objekte dennoch gewährleistet bleibt. Weiterhin kann ein Absolutwert der Kenngröße wie in Schritt S3 festgelegt werden, welcher als Startwert zum Vergleichen der zuerst gemessenen Werte der Kenngrößen von Objekten herangezogen wird, bis in den folgenden Verfahrensschritten ein Schwellenwert der Kenngröße aus einer vorgegebenen Anzahl von Objekten ermittelt wird.

Nach oben beschriebenem Auswählen des Betriebsmodus wird das Verfahren zum Aussortieren von Objekten gestartet, wobei in einem Schritt S4 das nächste Objekt 2 der Messeinrichtung 3, 4, 6 durch die Transporteinrichtung 5 zugeführt wird. In Schritt S5 wird der Wert der Kenngröße für die Gebrauchsspuren des Objekts ermittelt. Falls in Schritt S1 ein Vergleichen mit einem Absolutwert der Kenngröße ausgewählt wurde, erfolgt in Schritt S6 ein Vergleichen des gemessenen Werts der Kenngröße mit diesem Wert, welcher in Schritt S3 festgelegt wurde. Je nach Unter- bzw. Überschreiten dieses Absolutwerts wird das Objekt in Schritt S7 ausgesondert oder in Schritt S8 als "gut" befunden und zur Wiederverwertung freigegeben. Daraufhin wird das Verfahren mit dem nächsten zu messenden Objekt mit Schritt S4 fortgesetzt.

In dem Fall der alternativen Auswahl des Betriebsmodus gemäß einer prozentualen Aussonderung wird nach dem Messen des Wertes der Kenngröße für die Gebrauchsspuren des Objekts 2 der Messwert in Schritt S9 zunächst in die Liste der Datenbank der Datenverarbeitungsanlage 7 eingetragen. Daraufhin wird in Schritt S10 geprüft, ob die Anzahl der Einträge der Liste gleich oder größer der vorgegebenen Anzahl der Messwerte der Kenngröße ist, welche der Entscheidung in diesem Betriebsmodus zugrunde liegen. Ist dies nicht der Fall, wird in Schritt S6 der jeweilige Messwert mit dem in Schritt S3 festgelegten Startwert verglichen, da noch kein Schwellenwert der Kenngröße aus einer vorgegebenen Anzahl von Objekten in einem vorangehenden Verfahrensschritt ermittelt worden ist. Je nach Unter- bzw. Überschreiten des Startwerts wird das Objekt in Schritt S7 ausgesondert oder in Schritt S8 zur Weiterverwertung freigegeben. In Schritt S4 wird dann das Verfahren mit dem nächsten Objekt zum Ermitteln eines weiteren Messwertes der Kenngröße fortgesetzt.

Wird in der Abfrage in Schritt S10 jedoch festgestellt, dass die Anzahl der Listeneinträge der vorgegebenen Anzahl von zu messenden Objekten entspricht, wird in Schritt S11 ein Schwellenwert der Kenngröße aus den Listeneinträgen zum in Schritt 12 anschließenden Vergleichen mit dem jeweils aktuellen Messwert der Kenngröße eines Objekts ermittelt. Weiterhin sind gegebenenfalls zusätzliche Vergleiche mit den in Schritt S2 festgelegten Minimal- und/oder Maximalwerten vorgesehen. Bei zu dem Scuffing-Grad umgekehrt proportionaler Kenngröße erfolgt bei Unterschreiten des Startwerts bzw. des ermittelten Schwellenwerts oder des Minimalwerts in Schritt S7 eben nicht ein Aussondern des Objekts. Im anderen Fall wird in Schritt S8 das gemessene Objekt 2 zur Wiederverwertung freigegeben. Bei vorgenannter umgekehrter Proportionalität gilt letzteres in jedem Fall bei Überschreiten des Maximalwerts.

Es folgt Schritt S4 mit dem nächsten zu messenden Objekt 2.

Falls in Schritt S10 die Anzahl der Listeneinträge die Anzahl der zu messenden Objekte übersteigt, wird in Schritt S11 in der Liste nach dem FIFO-Prinzip (First In-First Out) der jeweils vor dem längsten Zeitraum in die Liste eingetragene Messwert gelöscht und der jeweils aktuelle Messwert in die Liste eingetragen. Es schließt sich eine erneute Bestimmung des Schwellenwertes der Kenngröße aus den Werten der somit aktualisierten Liste an.

Daraufhin erfolgt in Schritt S12 ein Vergleichen des aktuellen Messwerts mit dem so ermittelten Schwellenwert der Kenngröße, wobei das Objekt 2 nach zusätzlichem Vergleichen mit dem in Schritt S2 festgelegten Minimal- bzw. Maximalwert in Schritt S7 ausgesondert oder in Schritt S8 zur Wiederverwertung freigegeben wird. Die Entscheidungskriterien zur Aussonderung des Objekts entsprechen dabei denjenigen, wie sie bereits voranstehend erläutert wurden. Nun wird das Verfahren in Schritt S4 mit dem nächsten zu messenden Objekt fortgesetzt.

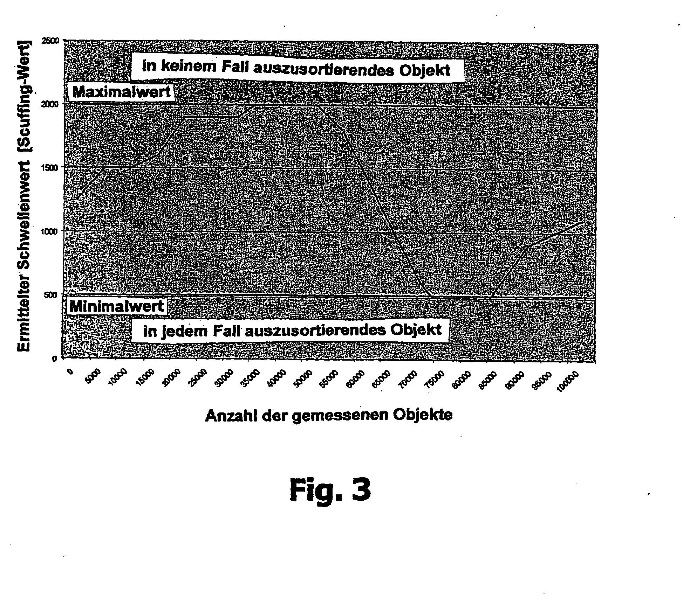

Die Fig. 3 zeigt ein Diagramm eines beispielhaften funktionalen Verlaufs des ermittelten Werts der Kenngröße aus den sukzessiv nacheinander gemessenen Werten der Kenngröße jeweils einer vorgegebenen Anzahl von Objekten in Abhängigkeit von der Gesamtzahl der gemessenen Objekte. Die ermittelten Schwellenwerte der Kenngröße sind in Einheiten ihres Scuffing-Wertes angegeben, welcher ein Maß für die vorhandenen Gebrauchsspuren an dem Objekt darstellt, wobei der Scuffing-Wert umgekehrt proportional zum Scuffing-Grad ist, d.h. ein hoher Scuffing-Wert "gute" Behälter mit geringen Gebrauchsspuren, ein geringer Scuffing-Wert "schlechte" Behälter mit starken Gebrauchsspuren bezeichnet.

Dabei wurde der Schwellenwert der Kenngröße jeweils nach einer Bestimmung der Messwerten einer vorgegebenen Anzahl von 5.000 Objekten ermittelt. Bis zu einer Gesamtzahl von 0 bis 35.000 Objekten schwankt der ermittelte Schwellenwert der Kenngröße zwischen 1.250 und 2.000. Zwischen einer Anzahl von 35.000 und 55.000 Objekten überschreitet der ermittelte Schwellenwert der Kenngröße den festgelegten Maximalwert der Kenngröße von 2.000. In diesem Fall werden auch solche Objekte nicht aussortiert werden, die den Schwellenwert der Kenngröße unterschreiten, jedoch den Maximalwert überschreiten. Es werden jedoch sicher alle Objekte ausgeschleust, die den unteren Schwellwert unterschreiten.

In einem Bereich einer Anzahl zwischen 55.000 und 75.000 Objekten wird ein abfallender Schwellenwert der Kenngröße von 2.000 bis zu 500 ermittelt. In einem Bereich von zwischen 75.000 und 85.000 gemessenen Objekten unterschreitet der ermittelte Schwellenwert der Kenngröße den festgelegten Minimalwert, so dass auch ein Aussortieren von Objekten erfolgt, welche den ermittelten Schwellenwert der Kenngröße zwar überschreiten, jedoch den als 500 festgelegten Minimalwert unterschreiten. Es werden jedoch Objekte, die den oberen Schwellwert überschreiten, nicht aussortiert.

### Bezugszeichenliste

- 1: Vorrichtung zum Aussortieren von Objekten
- 2: Objekt
- 3: Beobachtungseinrichtung
- 4, 4': Lichtquelle
- 5: Transporteinrichtung
- 6: Referenzgeometrie
- 6.1: Gitterstäbe
- 6.2: Durchbrüche
- 6.3: Hintergrund
- 7: Datenverarbeitungsanlage
- B: Beobachtungsrichtung
- P: Transportrichtung
- G: Oberflächenpunkt auf der Referenzgeometrie
- α: Reflexionswinkel zur Beobachtungsrichtung

## Patentansprüche

1. Verfahren zum Aussortieren von Objekten, insbesondere Getränkeflaschen aus Kunststoff oder Glas auf Grund von Gebrauchsspuren wie Kratzern oder dergleichen, wobei ein Wert einer Kenngröße für die Gebrauchsspuren eines jeweiligen Objektes gemessen wird und das Objekt anhand eines Vergleichens mit einem Schwellenwert der Kenngröße aussortiert und der Schwellenwert der Kenngröße aus den jeweils gemessenen Werten der Kenngröße einer vorgegebenen Anzahl von Objekten ermittelt wird, **dadurch gekennzeichnet, dass** der Schwellenwert für die jeweils nächste Messung auf der Basis eines vorgegebenen prozentualen Anteils aus den vorausgehenden Messungen automatisch ermittelt wird.

2. Verfahren nach Anspruch 1, **dadurch gekennzeichnet, dass** der dynamisch ermittelte Schwellenwert durch Setzen eines Minimal- sowie eines Maximalwertes begrenzt wird.

3. Vorrichtung zum Aussortieren von Objekten, insbesondere Getränkeflaschen aus Kunststoff oder Glas auf Grund von Gebrauchsspuren wie Kratzern oder dergleichen, mit einer Messeinrichtung zum Messen der Werte einer Kenngröße für die Gebrauchsspuren eines jeweiligen Objektes (2) und einer Vergleichseinrichtung zum Vergleichen des gemessenen Werts mit einem Schwellenwert der Kenngröße, anhand welchem das Objekt aussortiert wird, **dadurch gekennzeichnet, dass** durch eine Einrichtung (7) zum Ermitteln des Schwellenwertes der Kenngröße für die jeweils nächste Messung auf der Basis eines vorgegebenen prozentualen Anteils, die Kenngröße aus den vorausgehenden Messungen automatisch bestimmt wird.

4. Vorrichtung nach Anspruch 3, **dadurch gekennzeichnet, dass** der dynamisch ermittelte Schwellenwert durch Setzen eines Minimal- sowie eines Maximalwertes begrenzt wird.

## Claims

1. Process for the sorting of objects, particularly beverage bottles made of plastic or glass based on signs of usage such as scratches or the like, whereby the value of a parameter is measured for the signs of usage of a respective object and the object is sorted based on a comparison with a threshold value of the parameter and the threshold value of the parameter is determined in each case from the measured values of the parameter of a predetermined number of objects, **characterised by** the fact that the threshold value for the next measurement is automatically determined in each case on the basis of a predetermined percentage from the previous measurements.

2. Process according to claim 1, in that the dynamically determined threshold value is limited by the setting of a minimum and a maximum value.

3. Device for the sorting of objects, particularly beverage bottles made of plastic or glass based on signs of usage such as scratches or the like, with a measuring device for measuring the value of a parameter for the signs of usage of a respective object (2) and a comparator for comparison of the measured value with a threshold value of the parameter, based on which the object is sorted, **characterised by** the fact that the parameter is automatically determined from the previous measurements by a device (7) for the determination of the threshold value of the parameter for the next measurement on the basis of a predetermined percentage.

4. Device according to claim 3, in that the dynamically determined threshold value is limited by the setting of a minimum and a maximum value.

## Revendications

1. Un procédé de triage d'objets, en particulier de bouteilles de boisson en plastique ou en verre, sur la base de traces d'utilisation comme des rayures ou autres traces similaires, dans lequel on mesure une grandeur caractéristique pour les traces d'utilisation d'un objet correspondant, on trie l'objet grâce à une comparaison avec une valeur seuil de la grandeur caractéristique, et on détermine la valeur seuil de la grandeur caractéristique à partir des valeurs de mesure de la grandeur caractéristique d'un nombre prédéterminé d'objets, **caractérisé en ce que** la valeur seuil est déterminée automatiquement pour la mesure suivante sur la base d'un pourcentage prédéterminé des mesures précédentes.

2. Procédé selon la revendication 1, **caractérisé en ce que** la valeur seuil déterminée dynamiquement est limitée par la fixation d'une valeur minimale ainsi que d'une valeur maximale.

3. Dispositif de triage d'objets, en particulier de bouteilles de boisson en plastique ou en verre, sur la base de traces d'utilisation comme des rayures ou autres traces similaires, avec un appareil de mesure pour la mesure de la grandeur caractéristique pour les traces d'utilisation d'un objet correspondant (2) et un dispositif comparatif pour la comparaison de la valeur mesurée avec une valeur seuil de la grandeur caractéristique grâce à quoi l'objet est trié, **caractérisé en ce que** la valeur caractéristique est déterminée automatiquement à partir des mesures précédentes grâce à un dispositif (7) de détermination de la valeur seuil de la grandeur caractéristique pour la mesure suivante sur la base d'un pourcentage prédéterminé.

4. Dispositif selon la revendication 3, **caractérisé en ce que** la valeur seuil déterminée dynamiquement est limitée par la fixation d'une valeur minimale ainsi que d'une valeur maximale.
